# EUROPÄISCHE PATENTANMELDUNG

(11) **EP 1 363 440 A1**
(43) Veröffentlichungstag der Anmeldung: **19.11.2003**
(21) Anmeldenummer: 02010936.9
(22) Anmeldetag: 16.05.2002
(51) Int. Cl.: H04L 29/06

(54) **Verfahren und Einrichtung zur Übermittlung von Nachrichten zwischen Schichten**

(71) Anmelder: SIEMENS AKTIENGESELLSCHAFT, 80333 München (DE)
(72) Erfinder: Mitjaja, Enric, 81369 Muenchen (DE)

(57) **Zusammenfassung**

Die Erfindung betrifft ein Verfahren und eine Einrichtung zur Übertragung von Informationen in einem Funkkommunikationssystem mit mindestens zwei zumindest über eine Funkkommunikations-Schnittstelle kommunizierenden Einrichtungen des Funkkommunikationssystems, wobei die Kommunikation in hierarchische Schichten gegliedert wird. Dabei werden Informationen von einer Schicht an eine Schicht anderer Hierarchie als Nachricht übermittelt. Die den Zeitpunkt der Generierung der Informationen betreffenden Daten können von der sendenden Einrichtung zur empfangenden Einrichtung übertragen werden.

## Beschreibung

Die Erfindung betrifft ein Verfahren zur Übertragung von Informationen in einem Funkkommunikationssystem mit mindestens zwei zumindest über eine Funkkommunikations-Schnittstelle kommunizierenden Einrichtungen des Funkkommunikationssystems nach dem Oberbegriff des Anspruchs 1.

Die Erfindung betrifft ferner eine Einrichtung zur Übertragung von Informationen in einem Funkkommunikationssystem mit mindestens zwei zumindest über eine Funkkommunikations-Schnittstelle kommunizierenden Einrichtungen des Funkkommunikationssystems nach dem Oberbegriff des Anspruchs 12, sowie ein Funkkommunikationssystem nach dem Oberbegriff des Anspruchs 13.

Kommunikationssysteme gewinnen allgemein zunehmend an Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Andere Entwicklungen sehen eine Kombination von öffentlichen Funkkommunikationsnetzen mit lokalen Funkkommunikationssystemen vor. Beide Ansätze können schließlich auch kombiniert werden. Die entstehenden hybriden Kommunikationssysteme führen in diesen genannten Fällen in der Regel zu einer Erhöhung der Zahl der zur Verfügung stehenden Dienste, ermöglichen aber auch eine größere Flexibilität auf Seiten der Kommunikation. Dazu werden Geräte entwickelt, die unterschiedliche Systeme nutzen können (Multi Homing).

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem einer flexiblen Verwaltung der Kapazität der Funkschnittstelle, die bei Funkkommunikationssystemen die Schnittstelle mit den geringsten bzw. knappsten Ressourcen ist. Bei diesen Funkkommunikationssystemen soll es vor allem durch die flexible Verwaltung der Funkschnittstelle möglich sein, dass eine Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funkkommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird (DS Direct Sequence CDMA). Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zweidimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband vorsieht.

In Funkkommunikationsverbindungen - beispielsweise in denen der zweiten und/oder dritten Generation - können Informationen kanalvermittelt (CS Circuit Switched) oder paketvermittelt (PS Packet Switched) übertragen werden. Auf kanalvermittelter Informationsübertragung beruht das GSM System der zweiten Generation an Mobilfunksystemen. Ein Beispiel für packetvermittelte Übertragung der Informationen stellt beispielsweise das das GPRS (General Packet Radio Service) der erweiterten zweiten Generation dar.

Der Informationsaustausch zwischen zwei kommunizierenden Einrichtungen eines Funkkommunikationssystems ist komplex und wird in einzelne, hierarchische Schichten (Layer) gegliedert. Von der Internationalen Standardisierungsorganisation ISO (International Organization for Standardization) wurde ein allgemein akzeptiertes Schichtenmodell - das ISO/OSI-Referenzmodell- für offene Kommunikationssysteme spezifiziert. Das Modell beschreibt die Verbindung offener digitaler Systeme (OSI Open Systems Interconnection) und findet nahezu in allen heute realisierten Kommunikationssystemen Anwendung. Das ISO/OSI-Referenzmodell hat wesentlich zu einer weitgehenden Standardisierung der Kommunikationssysteme beigetragen.

Im ISO/OSI-Referenzmodell bietet jede Schicht (mit Ausnahme der obersten) der nächstenhöheren Schicht Dienste (Services) an. Um die Dienste erbringen zu können, erfolgt eine Informationsübermittlung zwischen den Instanzen der jeweiligen Schicht der kommunizierenden Systeme mittels sogenannter Protokolle. Für diese Übermittlung stehen einer Schicht die Dienste der nächstniedrigen Schicht zur Verfügung. Innerhalb eines Prozesses kommuniziert also jede Instanz direkt lediglich mit der nächsthöheren und der nächstniedrigen Instanz. Übergeordnete Schichten werden als Dienstnutzer und die unterliegende Schicht als Diensterbringer bezeichnet.

Das Modell beruht auf verschiedenen Prinzipien. Jede Schicht realisiert eine genau definierte Funktion, wobei sich die Festlegung der Funktionen an genormten Protokollen orientiert. Die Grenzen zwischen den einzelnen Schichten sind so gewählt, dass der Nachrichtenfluss über die Schnittstellen möglichst gering ausfällt. In der Regel bedeutet jede höhere Schicht einen neuen Abstraktionsgrad der tiefer liegenden Schichten. Teilweise werden auch verschiedene Funktionen in dieselbe Schicht gelegt.

Meist befindet sich auf der einen Seite der Funkschnittstelle ein mobiles Endgerät als kommunizierende Einrichtung und auf der anderen Seite eine über das Basisstationsnetzwerk an ein Kernnetz (Core Net) angebundene Basisstation. Diese Basisstationen besitzen eine einheitliche Funktion, können aber je nach technischem System unterschiedliche Bezeichnungen aufweisen wie beispielsweise BTS (Base Transceiver Station) im GSM-System, Node B im UMTS-System oder AP (Access Point) im HIPERLAN/2-System. In sogenannten Ad hoc Funkkommunikationssystemen können Verbindungen zumindest für einen Teil der End-zu-End-Verbindungsstrecke über eine (hop) oder auch mehrere Luftschnittstellen (multihop) zwischen unterschiedlichen Teilnehmerstationen hergestellt werden.

Für die Übertragung von Informationen in einem Funkkommunikationssystem mit mindestens zwei zumindest über eine Funkkommunikations-Schnittstelle kommunizierenden Einrichtungen des Funkkommunikationssystems wird die Kommunikation in hierarchische Schichten gegliedert. Dabei werden Informationen von einer Schicht an eine Schicht anderer Hierarchie als Nachricht (primitive) übermittelt. Insbesondere betrifft dies den Fall der Übermittlung von Informationen als Nachricht von einer hierarchisch höheren Schicht an eine hierarchisch niedrigere Schicht, aber auch die nachrichtliche Informationsübermittlung von einer hierarchisch niedrigeren Schicht an eine hierarchisch höhere Schicht.

Aus dem Dokument "CPCH Delay Measurements for TS25.321, MAC Protocol", TGS RAN WG 2'6, August 16-20, 1999, Sophia-Antipolis, Frankreich, [TSGR2#6(99)801] ist bekannt, Zeitstempel in der Schichtkommunikation zu verwenden. Dort wurde für ein UTRAN-System zur Messung von Verzögerungen eines gemeinsamen Paketkanals (CPCH Common Packet Channel) in der Mediumszugangskontrollschicht (MAC-Layer, Medium Access Control Layer) vorgeschlagen, einerseits eine Speicherverzögerung (buffer delay), welche sich aus der Verzögerung im Aufwärtsverkehr in dem Speicher der Schicht 2 (Sicherungsschicht) bis zur Gelegenheit einer Übertragung im Funknetzwerk ergibt, und andererseits eine Funkzugangsverzögerung (radio access delay), welche die Verzögerung im Verkehr in Aufwärtsrichtung auf der Schicht 1 (physikalische Schicht) betrifft, während eine Teilnehmerstation (UE User Equipment) auf eine Zugang zu einem gemeinsamen Aufwärtskanal wartet, zu berechnen. Ein Zeitstempel wird dabei immer anhand des Absendezeitpunktes eines Datenblockes vergeben.

In einer Nachrichtenübermittlung zwischen benachbarten Schichten kann Information enthalten sein, die in der benachbarten Schicht für Aktionen oder Reaktionen benutzt wird, beispielsweise um bestimmte Prozesse auszuführen und/oder um Entscheidungen zu treffen, wie auf eine bestimmte Information in der Nachricht geantwortet werden soll.

Eine grundlegende Schwierigkeit in Funkkommunikationssystemen liegt in der Problematik der möglicherweise großen zeitlichen Invarianz der Eigenschaften einer Funkverbindung. Dies macht oft sehr schnelle Aktionen oder Reaktionen im System erforderlich. Durch Verzögerungen (queues, buffers, ...) kann aber die in der Nachricht enthaltene Informationen nicht so zeitnah übermittelt werden, wie dies für eine den Zeitpunkt der Information betreffende Aktion oder Reaktion erforderlich oder wünschenswert wäre. Neben zeitunkritischen Informationen werden auch zeitkritische Informationen in Nachrichten zwischen den Schichten eingebunden. Ein Beispiel hierfür betrifft etwa Informationen zu Messungen einer gegenwärtigen Bitfehlerrate (bit error rate) in unteren Schichten, die nur für eine bestimmte Zeit Gültigkeit haben kann und jedenfalls an einen Zeitpunkt der Erfassung gekoppelt ist. In ad hoc Zonen kann eine Information über mehrere Sprünge (hops) erst verzögert die gewünschte Einrichtung erreichen.

In Funkkommunikationssystemen einer Generation oberhalb der dritten (3G+) wird der Informationsaustausch zwischen Schichten verschiedener Hierarchie eine noch größere Rolle zukommen, als dies in den Systemen der dritten Generation der Fall sein wird.

Der vorliegenden Erfindung liegt daher die Aufgabe zugrunde, ein Verfahren, eine Einrichtung und ein Funkkommunikationssystem der eingangs genannten Art aufzuzeigen, durch welche die Kommunikation erleichtert oder die Nutzung des Funkkommmunikationssystems verbessert werden kann. Hierbei sollte insbesondere die zeitliche Invarianz der Funkverbindung bzw. die zeitkritische Charakter bestimmter Informationen Berücksichtigung finden.

Diese Aufgabe wird erfindungsgemäß für das Verfahren durch den im Anspruch 1 beschriebenen Gegenstand gelöst.

Vorteilhafte Ausgestaltungen und Weiterbildungen sind Gegenstand der Unteransprüche.

Erfindungsgemäß werden im Zusammenhang mit der Übermittlung der Nachricht Daten an die hierarchisch andere Schicht übermittelt, welche den Zeitpunkt der Generierung von Informationen in der Nachricht betreffen.

Dies bringt den Vorteil, dass der Wert einer zeitkritischen Information überhaupt erst in Fällen einer verzögerten Übermittlung erfasst werden kann. Das kann zu dem Verwerfen einer Information als überaltert führen, wobei in Kenntnis dieser Tatsache eine unter Umständen eine neue Information angefordert werden kann.

Die Erfindung lässt sich auch im Zusammenhang mit Übermittlungen von Information zwischen Schichten verwenden, welchen Hierarchien in einem dem ISO/OSI-Referenzmodell nur teilweise entsprechenden Modell zugeordnet sind.

Im Gegensatz zum oben angeführten Dokument "CPCH Delay Measurements for TS25.321, MAC Protocol", TGS RAN WG 2'6, August 16-20, 1999, Sophia-Antipolis, Frankreich, [TSGR2#6(99)801] betreffen gemäß der vorliegenden Erfindung die Zeitdaten bzw. ein möglicherweise auch verwendeter Zeitstempel den Zeitpunkt der Generierung von Informationen und nicht den Absendezeitpunkt einer Nachricht. Darüber hinaus wird dort die Zeitinformation lediglich innerhalb des Schicht 2 verwendet und nicht von einer Schicht an eine hierarchisch andere Schicht übermittelt.

In Ausgestaltung der Erfindung ist vorgesehen, die den Zeitpunkt der Generierung der Informationen betreffenden Daten von der sendenden Einrichtung zur empfangenden Einrichtung zu übertragen. Damit können zusätzliche Vorteile im Funkkommunikationssystem genutzt werden, da auf der Empfängerseite die Daten erfasst und berücksichtigt werden können.

Auch eine derartige erfindungsgemäße Übertragung von Zeitinformation über die Luftschnittstelle unterscheidet die Erfindung deutlich von dem Vorschlag aus dem Dokument "CPCH Delay Measurements for TS25.321, MAC Protocol", TGS RAN WG 2'6, August 16-20, 1999, Sophia-Antipolis, Frankreich, [TSGR2#6(99)801]. Eine Übertragung von Zeitdaten in Nachrichten zwischen Schichten unterschiedlicher Hierarchie und über die Luftschnittstelle ist dort weder beschrieben noch angedacht.

Die den Zeitpunkt der Generierung der Informationen innerhalb der Nachricht betreffenden Daten können explizit einen Zeitpunkt (Stunden, Minuten, Sekunden, Millisekunden o.ä.) umfassen. Möglich ist aber auch, dass die den Zeitpunkt der Generierung der Informationen betreffenden Daten implizit einen Zeitpunkt angeben. Dies kann beispielsweise in Form von Rahmen eines unteren Schichtsystems geschehen, welche in einen expliziten Zeitpunkt umgewandelt werden können. Beispielsweise kann in der Empfangsschicht oder der Konvergenzschicht eine Konvertierung in einen expliziten Zeitpunkt erfolgen. Der Zeitpunkt der Generierung der Informationen in einer Schicht kann also über Rahmen aus einer unteren Schicht ermittelt werden.

In Weiterbildung der Erfindung kann anhand der den Zeitpunkt der Generierung der Informationen betreffenden Daten eine Maßnahme des Funkkommunikationssystems ausgelöst werden. Dies kann unmittelbar oder mittelbar geschehen. Insbesondere können die Daten in einen Algorithmus eingebunden werden. Dies erlaubt sowohl schnelle als auch flexible Reaktionen im Funkkommunikationssystem.

Besondere Vorteile sind dadurch zu erzielen, dass die den Zeitpunkt der Generierung der Information betreffenden Daten für eine Priorisierung von Maßnahmen des Funkkommunikationssystems benutzt werden. In dieser Zeitinformation kann eine günstiger Parameter für die Priorisierung von Maßnahmen enthalten sein, welche sowohl netzseitig als auch auf Seiten eines Mobilfunkteilnehmers ausgenutzt werden kann.

Die Maßnahme oder die Maßnahmen können das Funkressourcenmanagement des Funkkommunikationssystems betreffen. Es wurde bereits erkannt, dass in Funkkommunikationssystemen einer Generation oberhalb der dritten (beyond 3G) das Funkressourcenmanagement eine Schlüsselrolle für die Nutzung der beschränkt verfügbaren Kapazität darstellt. Es ist unter Umständen entscheidend, in einer Kontrollinstanz zu wissen, welche Ressourcen zu einem bestimmten Zeitpunkt von den unterschiedlichen Einrichtungen, die im Funkkommunikationsnetz aktiv sind, genutzt werden. Für eine schnelle Allokierung von Funkressourcen kann die genaue Kenntnis eines Status einer genutzten Ressource bedeutend sein. Allerdings kann die Information an sich, ohne Kenntnis des Zeitpunktes, auf den sie sich bezieht, nutzlos oder nur von geringem Nutzen sein. Umgebungen mit mehreren Systemen (multihomed environments), in denen mehr als eine Schnittstelle aktiv sein kann, stellen hier besondere Anforderungen.

Die im Funkkommunikationssystem ergriffene Maßnahme oder die Maßnahmen können einen Handover betreffen, beispielsweise durch Informationen zur Bitfehlerrate oder Messungen aus Nachbarzellen. Solche Informationen besitzen eine nur eine kurze Gültigkeitsdauer und sind in der Regel sehr zeitkritisch. Ein Algorithmus, der die verschiednen Informationen mit ihren zeitbezogenen Daten verarbeitet, kann die einzelnen Informationen aufgrund ihres Zeitpunktes der Generierung der Daten beispielsweise unterschiedlich gewichten. Ein Handover kann dabei zwischen verschiedenen Funkzellen einer einzigen Basistation oder zwischen verschiedenen Basisstationen desselben technischen Funkkommunikationssystems erfolgen. Auch ein Handover zwischen Basisstationen, welche zu verschiedenen Funkkommunikationssystemen gehören, ist möglich. Beispielsweise kann eine Basisstation zum UMTS-Netzwerk gehören und eine andere Basisstation Teil eines WLAN-Netzes sein. Ein Wechsel kann hier initiiert werden beispielsweise wegen der Qualität der Verbindung, wegen netzspezifischer Eigenschaften der unterschiedlichen Netzwerkverbindungen wie zum Beispiel unterschiedliche Kosten und/oder wegen netzwerkindividueller Verfügbarkeiten von speziellen Diensten.

Die Maßnahme oder die Maßnahmen können aber auch die Vergebührung oder Netzwerkmanagementaufgaben betreffen. Es kann entscheidend sein zu wissen, wann beispielsweise bestimmte Ereignisse stattgefunden haben, um bestimmte Prozesse vorteilhaft triggern zu können. Beispielsweise kann interessant sein zu wissen, wann vom Teilnehmer oder Nutzer erbetene Dienstgüteanforderungen (QoS Quaslity of Service) schließlich vom Netzwerk zur Verfügung gestellt werden. Dies könnte etwa für die Bestätigung von Dienstschichten betreffenden Vereinbarungen zwischen Netzwerkdienstanbietern von Bedeutung sein.

Schließlich können die Maßnahme oder die Maßnahmen das rechtmäßige Abhören (lawful intercept) oder einen Notruf (E911) betreffen. Die Erfindung kann hier nutzbringend eingesetzt werden, um exakt zu erfahren, wann bestimmte Ereignisse eingetreten sind.

Die erfindungsgemäße Einrichtung zur Übertragung von Informationen in einem Funkkommunikationssystem mit mindestens zwei zumindest über eine Funkkommunikations-Schnittstelle kommunizierenden Einrichtungen des Funkkommunikationssystems umfasst Mittel zum Übermitteln von Informationen von einer Schicht an eine Schicht anderer Hierarchie als Nachricht, wobei die Kommunikation in hierarchische Schichten gegliedert ist. Die Einrichtung ist gekennzeichnet durch Mittel zur Erzeugung von und/oder Übermittlung von Daten, welche den Zeitpunkt der Generierung von Informationen in der Nachricht betreffen. Insbesondere kann die Einrichtung eine Teilnehmerstation betreffen.

In einem Funkkommunikationssystem zur Übertragung von Informationen, welches mindestens zwei über eine Funkkommunikations-Schnittstelle kommunizierende Einrichtungen umfasst, ist zumindest eine oben beschriebene Einrichtung vorhanden. Dies kann bevorzugt eine sendende Einrichtung, aber auch eine empfangende Einrichtung sein.

Im Funkkommunikationssystem können Mittel zum Auslösen einer Maßnahme des Funkkommunikationssystems aufgrund der den Zeitpunkt der Generierung der Informationen betreffenden Daten vorgesehen sein.

Ferner können im Funkkommunikationssystem weitere Mittel zur Durchführung der entsprechend abgewandelten, oben ausgeführten Verfahren gemäß der Erfindung vorhanden sein.

Grundsätzlich kann im Zusammenhang mit der Erfindung auch auf Erkenntnisse zurückgegriffen werden, die im Zusammenhang mit den öffentlich geförderten Projekten BRAIN und MIND gewonnen worden sind. Dies trifft insbesondere auf die sogenannte IP₂W Schnittstelle (IP to Wireless Convergence Interface), welche die IP Schicht und die funkspezifische Verbindungsschicht überbrückt, und die ESI Schnittstelle (Enhanced Socket Interface), die Transportschicht und Anwendungsschicht trennt, zu. Gerade bei diesen Schnittstellen könnte eine Übermittlung der Daten, welche den Zeitpunkt der Generierung von Informationen in der Nachricht betreffen, im Zusammenhang mit der Übermittlung der Nachricht an die hierarchisch andere Schicht große Vorteile mit sich bringen.

## Patentansprüche

1. Verfahren zur Übertragung von Informationen in einem Funkkommunikationssystem mit mindestens zwei zumindest über eine Funkkommunikations-Schnittstelle kommunizierenden Einrichtungen des Funkkommunikationssystems,
wobei die Kommunikation in hierarchische Schichten gegliedert wird,
wobei Informationen von einer Schicht an eine Schicht anderer Hierarchie als Nachricht übermittelt werden,
**dadurch gekennzeichnet,**
**dass** im Zusammenhang mit der Übermittlung der Nachricht Daten an die hierarchisch andere Schicht übermittelt werden, welche den Zeitpunkt der Generierung von Informationen in der Nachricht betreffen.

2. Verfahren nach Anspruch 1, **dadurch gekennzeichnet, dass** die den Zeitpunkt der Generierung der Informationen betreffenden Daten von der sendenden Einrichtung zur empfangenden Einrichtung übertragen werden.

3. Verfahren nach Anspruch 1 oder 2, **dadurch gekennzeichnet, dass** die den Zeitpunkt der Generierung der Informationen betreffenden Daten explizit einen Zeitpunkt umfassen.

4. Verfahren nach Anspruch 1 oder 2, **dadurch gekennzeichnet, dass** die den Zeitpunkt der Generierung der Informationen betreffenden Daten implizit einen Zeitpunkt angeben.

5. Verfahren nach Anspruch 4, **dadurch gekennzeichnet, dass** der Zeitpunkt der Generierung der Informationen in einer Schicht über Rahmen aus einer unteren Schicht ermittelt wird.

6. Verfahren nach einem der Ansprüche 1 bis 5, **dadurch gekennzeichnet, dass** anhand der den Zeitpunkt der Generierung der Informationen betreffenden Daten eine Maßnahme des Funkkommunikationssystems ausgelöst wird.

7. Verfahren nach Anspruch 6, **dadurch gekennzeichnet, dass** die den Zeitpunkt der Generierung der Information betreffenden Daten für eine Priorisierung von Maßnahmen des Funkkommunikationssystems benutzt wird.

8. Verfahren nach einem der Ansprüche 6 oder 7, **dadurch gekennzeichnet, dass** die Maßnahme oder die Maßnahmen das Funkressourcenmanagement des Funkkommunikationssystems betreffen.

9. Verfahren nach einem der Ansprüche 6 bis 8, **dadurch gekennzeichnet, dass** die Maßnahme oder die Maßnahmen einen Handover betreffen.

10. Verfahren nach einem der Ansprüche 6 bis 9, **dadurch gekennzeichnet, dass** die Maßnahme oder die Maßnahmen die Vergebührung oder Netzwerkmanagementaufgaben betreffen.

11. Verfahren nach einem der Ansprüche 6 bis 10, **dadurch gekennzeichnet, dass** die Maßnahme oder die Maßnahmen das rechtmäßige Abhören oder einen Notruf betreffen.

12. Einrichtung zur Übertragung von Informationen in einem Funkkommunikationssystem mit mindestens zwei zumindest über eine Funkkommunikations-Schnittstelle kommunizierenden Einrichtungen des Funkkommunikationssystems,
wobei die Kommunikation in hierarchische Schichten gegliedert ist,
umfassend Mittel zum Übermitteln von Informationen von einer Schicht an eine Schicht anderer Hierarchie als Nachricht,
**dadurch gekennzeichnet,**
**dass** Mittel zur Erzeugung von und/oder Übermittlung von Daten vorhanden sind, welche den Zeitpunkt der Generierung von Informationen in der Nachricht betreffen.

13. Funkkommunikationssystem zur Übertragung von Informationen umfassend mindestens zwei über eine Funkkommunikations-Schnittstelle kommunizierende Einrichtungen,
**dadurch gekennzeichnet,**
**dass** zumindest eine Einrichtung nach Anspruch 12 vorhanden ist.

14. Funkkommunikationssystem nach Anspruch 13, **dadurch gekennzeichnet, dass** Mittel zum Auslösen einer Maßnahme des Funkkommunikationssystems aufgrund der den Zeitpunkt der Generierung der Informationen betreffenden Daten vorgesehen sind.
